# EUROPÄISCHE PATENTANMELDUNG

(11) **EP 4 178 165 A1**
(43) Veröffentlichungstag der Anmeldung: **10.05.2023**
(21) Anmeldenummer: 21206550.2
(22) Anmeldetag: 04.11.2021
(51) Int. Cl.: H04L 12/28, E03C 1/02, E03D 5/10, E03D 13/00, G05B 15/02, G05B 19/042

(54) **GATEWAY FÜR SANITÄRSYSTEM**

(71) Anmelder: Geberit International AG, 8645 Jona (CH)
(72) Erfinder: RAISSLE, Daniel, 8852 Altendorf (CH); OBERHOLZER, Roland, 8610 Uster (CH); PORTMANN, Florian, 8708 Männedorf (CH); HARTMANN, Andy, 8712 Stäfa (CH); SALZMANN, Stefan, 8640 Rapperswil (CH)
(74) Vertreter: Frischknecht, Harry Ralph

(57) **Zusammenfassung**

Ein Gateway (1) für ein Sanitärsystem umfasst
eine elektronische Schaltung (2) mit einem Prozessor (3),
eine Energieversorgungsschnittstelle (4) zur Stromversorgung des Gateways (1), insbesondere der elektronischen Schaltung,
mindestens eine Ethernet-Schnittstelle (5),
mindestens eine USB-Schnittstelle (6, 7),
mindestens eine Bus-Schnittstelle (8), welche zur Wirkverbindung mit einer Sanitärartikelsteuerung von mindestens einem Sanitärartikel konfiguriert ist, und
mindestens eine drahtlose Funkschnittstelle (9),
wobei die mindestens eine Ethernet-Schnittstelle (5), die mindestens eine USB-Schnittstelle (5, 6), die mindestens eine Bus-Schnittstelle (8) und die mindestens eine drahtlose Funkschnittstelle (9) mit der elektronischen Schaltung (2) in Wirkverbindung stehen und
wobei die elektronische Schaltung (2) mit dem Prozessor (3) derart konfiguriert ist, dass Daten zwischen den genannten Schnittstellen (5, 6, 7, 8, 9) via den Prozessor (3) austauschbar sind und/oder dass Daten zwischen den genannten Schnittstellen (5, 6, 7, 8, 9) und dem Prozessor (3) der elektronischen Schaltung (2) austauschbar sind.

## Beschreibung

### TECHNISCHES GEBIET

Die vorliegende Erfindung betrifft ein Gateway für ein Sanitärsystem nach Anspruch 1.

### STAND DER TECHNIK

Aus dem Stand der Technik sind vernetzte Sanitärsysteme bekannt. Beispielsweise offenbart die DE 93 13 983 U1 eine Ansteuerung von diversen Sanitärelementen mit einer zentralen Steuerung. Die WO 2009/061857 zeigt die Anbindung einer Sanitärinfrastruktur an das Internet.

### DARSTELLUNG DER ERFINDUNG

Eine Aufgabe der vorliegenden Erfindung ist es, ein Gateway anzugeben, welches für einen vielseitigen Einsatz in Sanitärsystemen ausgebildet ist. Insbesondere ist es eine Aufgabe der vorliegenden Erfindung ein Gateway anzugeben, welches in einem Sanitärsystem vielseitig vernetzbar ist.

Diese Aufgabe löst das Gateway nach Anspruch 1. Demgemäss umfasst das Gateway für ein Sanitärsystem eine elektronische Schaltung mit einem Prozessor, eine Energieversorgungsschnittstelle zur Stromversorgung des Gateways, insbesondere der elektronischen Schaltung, mindestens eine Ethernet-Schnittstelle, mindestens eine USB-Schnittstelle, mindestens eine Bus-Schnittstelle, und mindestens eine drahtlose Funkschnittstelle. Die mindestens eine Ethernet-Schnittstelle, die mindestens eine USB-Schnittstelle, die mindestens eine Bus-Schnittstelle und die mindestens eine drahtlose Funkschnittstelle stehen mit der elektronischen Schaltung in Wirkverbindung. Die mindestens eine Bus-Schnittstelle ist zur Wirkverbindung mit einer Sanitärartikelsteuerung von mindestens einem Sanitärartikel konfiguriert. Die elektronische Schaltung mit dem Prozessor ist derart konfiguriert, dass Daten zwischen den genannten Schnittstellen via den Prozessor austauschbar sind und/oder dass Daten zwischen den genannten Schnittstellen und dem Prozessor der elektronischen Schaltung austauschbar sind.

Das Gateway verfügt über eine Vielzahl von Schnittstellen, welche einen modularen bzw. vielseitigen Einsatz des Gateways möglich machen. In einer ersten Einsatzkonfiguration kann das Gateway als alleinstehendes Steuerungselement für mehrere Sanitärartikel eingesetzt werden. In einer zweiten Einsatzkonfiguration kann das Gateway als Steuerelement für mehrere Sanitärartikel an ein übergeordnetes Leitsystem, wie ein Gebäudeleitsystem oder eine Cloud, angebunden werden, so dass die mehreren Sanitärartikel mit dem übergeordneten wirkverbunden werden.

Über die mindestens eine Ethernet-Schnittstelle kann das Gateway mit einem Ethernet-Netzwerk verbunden werden und an das übergeordnete Leitsystem angebunden werden. Vorzugsweise ist genau eine Ethernet-Schnittstelle am Gateway angeordnet. Vorzugsweise weist die Ethernet-Schnittstelle eine Ethernetbuchse auf, in welche ein Ethernetkabel einsteckbar ist. Die Ethernet-Schnittstelle kann alternativerweise auch als drahtlose WiFi-Schnittstelle ausgebildet sein.

Über die mindestens eine USB-Schnittstelle kann das Gateway mit einem Adapter und/oder einem Datenträger verbunden werden. Mit dem Adapter kann die Funktionalität des Gateways erweitert werden. Mit dem Datenträger können Daten vom Gateway ausgelesen oder eingespielt werden. Solche Daten sind beispielsweise Zustandsdaten der Sanitärartikel oder Aktualisierungsdaten für die Aktualisierung der Software auf dem Gateway. Der Datenträger kann beispielsweise ein USB-Stick oder ein Computer sein.

Die Bus-Schnittstelle ist, wie erwähnt, zur Verbindung mit mindestens einem Sanitärartikel ausgebildet. Vorzugsweise können mehrere Sanitärartikel mit jeweils einer Sanitärartikelsteuerung mit einer einzigen Bus-Schnittstelle wirkverbunden werden. Somit kann ein Gateway mit mehreren Sanitärartikeln wirkverbunden sein.

Die mindestens eine drahtlose Funkschnittstelle dient der Verbindung mit einem Computer oder einem mobilen Computer, wie ein Notebook, ein Tablet oder Mobiltelefon.

Vorzugsweise weist die Bus-Schnittstelle eine Datenschnittstelle auf. Die Datenschnittstelle ist vorzugsweise eine RS-485-Schnittstelle. Die Datenschnittstelle ist derart konfiguriert, dass Daten zwischen einer mit der Datenschnittstelle verbundenen Sanitärartikelsteuerung eines Sanitärartikels und der Datenschnittstelle austauschbar sind.

An die Bus-Schnittstelle ist ein Kabel anschliessbar, welches mit der Sanitärartikelsteuerung des Sanitärartikels verbindbar ist. Das Kabel umfasst dabei mindestens eine Datenbusleiteranordnung zur Übertragung von Daten zwischen dem Sanitärartikel und der Bus-Schnittstelle.

Vorzugsweise weist die Bus-Schnittstelle weiterhin eine Speisungsschnittstelle auf, welche derart konfiguriert ist, dass ein mit der Bus-Schnittstelle verbundener Sanitärartikel mit elektrischer Energie versorgbar ist bzw. dass eine mit der Bus-Schnittstelle verbundene Sanitärartikelsteuerung mit elektrischer Energie versorgbar ist. Die Sanitärartikelsteuerung kann direkt von der Speisungsschnittstelle gespiesen werden oder es können weitere elektrotechnische Elemente, wie ein Konverter, der Sanitärartikelsteuerung vorgeschaltet sein.

Vorzugsweise ist die Speisungsschnittstelle parallel zu den Schnittstellenbereichen, die für den Datenaustausch vorgesehen sind, angeordnet.

An die Bus-Schnittstelle ist ein Kabel anschliessbar, welches mit der Sanitärartikelsteuerung des Sanitärartikels verbindbar ist. Das Kabel umfasst dabei mindestens eine Datenbusleiteranordnung zur Übertragung von Daten zwischen dem Sanitärartikel und der Bus-Schnittstelle und eine Speisungsleiteranordnung zur Übertragung von elektrischer Energie zwischen der Speisungsschnittstelle und dem Sanitärartikel.

Die Bus-Schnittstelle und das Kabel lassen sich in beide Ausführungsformen über eine Stecker- und Buchsenanordnung miteinander verbinden.

Vorzugsweise ist der Speisungsschnittstelle ein Lastabwurfschalter mit einer Strommesseinheit vorgeschaltet, welcher Lastabwurfschalter derart ausgebildet ist, dass bei einem durch die Strommesseinheit gemessenen Überstrom oder bei der Erfassung eines Kurzschlusses der Lastabwurfschalter einen Schaltvorgang ausführt, so dass die Speisungsschnittstelle mindestens kurzzeitig stromlos geschaltet werden kann. Hierdurch kann im Falle eines Defekts verhindert werden, dass der Strom unkontrolliert ansteigt und es dadurch zu Beschädigungen am Gateway und/oder an der mindestens einen Sanitärartikelsteuerung kommt.

Ferner ist es denkbar, dass nach der Stromlosschaltung zyklisch überprüft wird, ob die Störung entfernt wurde.

Vorzugsweise ist die Energieversorgungsschnittstelle für die Aufnahme von Netzspannung ausgebildet, wobei die Netzspannung vorzugsweise 230 Volt Wechselstrom ist.

Vorzugsweise umfasst das Gateway einen Umwandler, welcher die Netzspannung in eine tiefere Spannung und Gleichstrom umwandelt.

Vorzugsweise liegt die tiefere Spannung im Bereich von 18 bis 48 Volt.

Vorzugsweise stellt der Umwandler die Speisung für die Speisungsschnittstelle in der Bus-Schnittstelle bereit.

Vorzugsweise ist zwischen dem Umwandler und dem Prozessor ein Spannungswandler angeordnet, welcher derart ausgebildet ist, dass die besagte tiefere Spannung weiter reduzierbar ist, so dass der Prozessor mit einer reduzierten Spannung versorgbar ist.

Vorzugsweise liegt die reduzierte Spannung im Bereich von 1.5 bis 24 Volt.

Vorzugsweise ist zwischen dem Spannungswandler und dem Prozessor ein linearer Gleichspannungsregler angeordnet. Der lineare Gleichspannungsregler sorgt für eine gleichbleibende Spannungsversorgung für den Prozessor.

Vorzugsweise ist eine USB-Schnittstelle der genannten USB-Schnittstellen zur Aufnahme eines Datenträgers ausgebildet, wobei die USB-Schnittstelle und der Prozessor der elektronischen Schaltung derart konfiguriert sind, dass über die USB-Schnittstelle Daten zwischen dem Prozessor und dem Datenträger austauschbar sind.

Die Daten sind beispielsweise Aktualisierungsdaten, welche dem Prozessor selbst und über den Prozessor den Sanitärartikelsteuerungen zur Verfügung gestellt werden können. Die Daten können aber auch Zustandsdaten der Sanitärartikelsteuerungen sein, welche auf den Datenträger zur weiteren Verarbeitung ausgelesen werden können.

Vorzugsweise ist eine USB-Schnittstelle der genannten USB-Schnittstellen zur Aufnahme eines Adapters mit einer Erweiterungsschnittstelle ausgebildet, wobei die USB-Schnittstelle und der Prozessor der elektronischen Schaltung derart konfiguriert sind, dass über die USB-Schnittstelle Daten zwischen dem Prozessor und der Erweiterungsschnittstelle des Adapters austauschbar sind.

Durch den Adapter kann die Modularität und Funktionalität des Gateways erweitert bzw. weiter erhöht werden.

Vorzugsweise weist das Gateway beide der genannten USB-Schnittstellen auf. Mit anderen Worten gesagt weist das Gateway vorzugsweise zwei USB-Schnittstellen auf, wobei eine der USB-Schnittstellen zur Aufnahme des Datenträgers konfiguriert ist und wobei die andere der USB-Schnittstelle zur Aufnahme des Adapters konfiguriert ist.

Vorzugsweise ist die drahtlose Funk-Schnittstelle eine WIFI-Schnittstelle und/oder eine Bluetooth-Schnittstelle und/oder eine ZigBee-Schnittstelle.

Vorzugsweise weist die elektronische Schaltung des Gateways einen Speicher auf, welcher zur Speicherung der Daten ausgebildet ist.

Vorzugsweise weist das Gateway weiterhin mindestens eine Statusleuchte auf, welche derart konfiguriert ist, dass einem Benutzer ein Status anzeigbar ist. Der Status kann beispielsweise die Funktion einer Schnittstelle sein. Vorzugsweise ist jeder der Schnittstellen eine Statusleuchte zugeordnet ist.

Eine Verwendung des hierin beschriebenen Gateways ist dadurch charakterisiert, dass das Gateway in einem Sanitärsystem eingesetzt wird, wobei das Gateway über die Bus-Schnittstelle mit einer Sanitärartikelsteuerung eines Sanitärartikels wirkverbunden ist.

Vorzugsweise ist pro Sanitärraum ein Gateway vorgesehen. Es ist auch möglich, dass in einem Sanitärraum mehrere Gateways vorhanden sind oder dass ein Gateway für mehrere Sanitärräume vorhanden sind.

Unter der Ausdrucksweise "Sanitärartikel" werden sämtliche in einem Sanitärraum zu platzierende Elemente verstanden. Insbesondere wird unter der Ausdrucksweise "Sanitärartikel" ein Urinal, eine Toilettenschüssel, ein Waschtisch, eine Betätigungsplatte, eine Sanitärarmatur, ein Montagegestell mit integriertem Sanitärartikelaktuator, ein Dusch-WC und/oder ein Dusch-WC-Aufsatz verstanden. Der Sanitärartikel kann aber auch ein Sensor sein, der in einem Sanitärraum angeordnet ist oder der ausserhalb des Sanitärraums angeordnet ist. Somit können beispielsweise Umgebungsdaten, wie Lufttemperatur, Luftfeuchtigkeit, Benutzerfrequenzen, etc. durch den Sensor erfasst und im Sanitärsystem entsprechend ausgewertet werden.

Vorzugsweise sind in einem Sanitärsystem eine Vielzahl von Sanitärartikeln angeordnet.

Die Sanitärartikelsteuerung kann je nach Funktion aktiv und/oder passiv mit dem Sanitärartikel zusammenarbeiten. Wenn der Sanitärartikel einen Aktuator, wie ein Ventil, umfasst, so kann die Sanitärartikelsteuerung den Aktuator aktiv ansteuern. Wenn der Sanitärartikel einen Sensor umfasst, so kann die Sanitärartikelsteuerung Sensordaten empfangen.

Die Daten sind vorzugsweise Steuerungsdaten und/oder Zustandsdaten und/oder Messdaten und/oder Parameterdaten. Vorzugsweise ist das Gateway, das Leitsystem und/oder der mobile Computer derart konfiguriert, dass die Daten weiterverarbeitet werden können. Beispielsweise können die Daten die Basis für eine kontrollierte Hygienespülung und/oder für zustandsorientierte Instandhaltungsarbeiten bilden.

Unter der Ausdrucksweise "mobiler Computer" wird ein mobiler Personal Computer, ein Notebook, ein Mobiltelefon, ein Tablet, ein Smartphone, eine Smartwatch oder ein ähnliches Gerät verstanden. Der Computer ist dabei derart konfiguriert, dass der Computer die beschriebenen Funktionen ausführen kann.

Unter der Ausdrucksweise "Prozessor" wird ein Verarbeitungselement verstanden, welches derart konfiguriert ist, dass die beschriebenen Schritte ausführbar sind.

Unter der Ausdrucksweise "Kommunikationsschnittstelle" wird eine Schnittstelle verstanden, über welche Daten zwischen den einzelnen Elementen ausgetauscht werden. Insbesondere zwischen dem Prozessor des Computers und dem Prozessor der Sanitärartikelsteuerung. Die Kommunikationsschnittstellen werden mit entsprechenden Protokollen betrieben.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

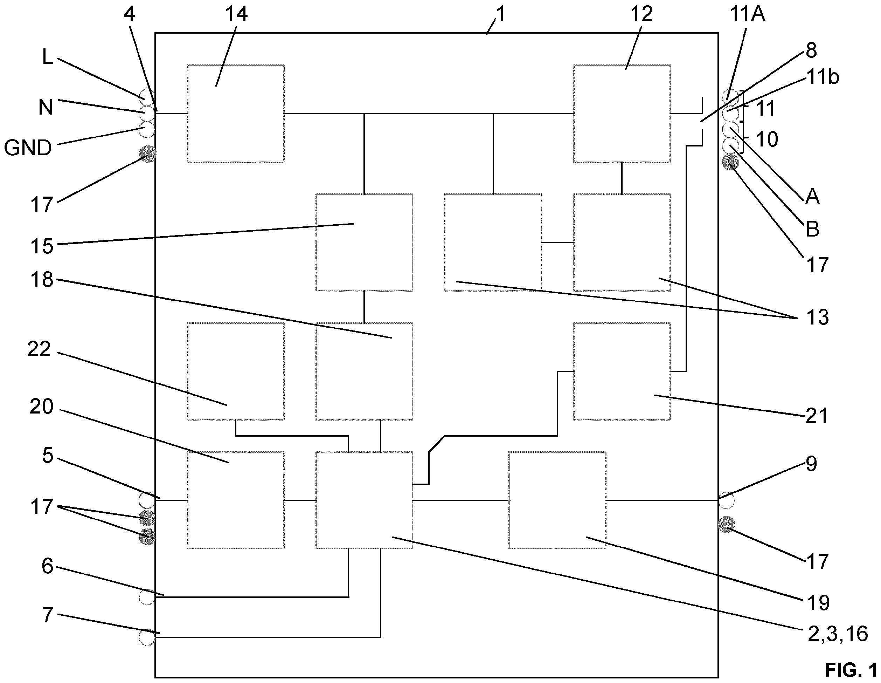

- Fig. 1: eine schematische Ansicht einer Ausführungsform eines erfindungsgemässen Gateways für ein Sanitärsystem.

### BESCHREIBUNG BEVORZUGTER AUSFÜHRUNGSFORMEN

In der Figur 1 wir eine schematische Darstellung eines Gateways 1 gemäss einer bevorzugten Ausführungsform der vorliegenden Erfindung gezeigt. Das Gateway 1 für ein Sanitärsystem umfasst
- eine elektronische Schaltung 2 mit einem Prozessor 3,
- eine Energieversorgungsschnittstelle 4 zur Stromversorgung des Gateways 1, insbesondere zur Stromversorgung der elektronischen Schaltung,
- mindestens eine Ethernet-Schnittstelle 5,
- mindestens eine USB-Schnittstelle 6, 7,
- mindestens eine Bus-Schnittstelle 8, welche zur Wirkverbindung mit einer Sanitärartikelsteuerung von mindestens einem Sanitärartikel konfiguriert ist, und
- mindestens eine drahtlose Funkschnittstelle 9.

Die mindestens eine Ethernet-Schnittstelle 5, die mindestens eine USB-Schnittstelle 6, 7, die mindestens eine Bus-Schnittstelle 8 und die mindestens eine drahtlose Funkschnittstelle 9 stehen mit der elektronischen Schaltung 2 in Wirkverbindung. Das heisst, dass alle genannten Schnittstellen mit der elektronischen Schaltung 2, insbesondere mit dem Prozessor 3, elektrisch leitend verbunden sind. Die elektronische Schaltung mit dem Prozessor 3 ist derart konfiguriert, dass Daten zwischen den genannten Schnittstellen 5, 6, 7, 8, 9 via den Prozessor 3 austauschbar sind und/oder dass Daten zwischen den genannten Schnittstellen 5, 6, 7, 8, 9 und dem Prozessor 3 der elektronischen Schaltung 2 austauschbar sind.

Vorzugsweise sind die Energieversorgungsschnittstelle 4, die mindestens eine Ethernet-Schnittstelle 5, die mindestens eine USB-Schnittstelle 6, 7, die mindestens eine Bus-Schnittstelle 8 jeweils als physische Buchsen ausgebildet, in welche ein Kabel mit einem Stecker eingesteckt werden kann.

Der Energieversorgungsschnittstelle 4 ist für die Aufnahme von Netzspannung ausgebildet, wobei die Netzspannung vorzugsweise 230 Volt Wechselstrom ist. Die Energieversorgungsschnittstelle 4 umfasst hier drei Leiter, nämlich einen Phasenleiter L, einen Nullleiter N und einen Erdungsleiter GND.

Der Energieversorgungsschnittstelle 4 nachgelagert ist ein Umwandler 14. Der Umwandler 14 wandelt die Netzspannung in eine tiefere Spannung und Gleichstrom um. Die tiefere Spannung ist vorzugsweise im Bereich von 18 bis 24 Volt.

In der gezeigten Ausführungsform weist die Bus-Schnittstelle nebst der Datenschnittstelle weiter eine Speisungsschnittstelle 11 auf. Die Speisungsschnittstelle 11 ist derart konfiguriert, dass ein mit der Bus-Schnittstelle 8 verbundener Sanitärartikel mit elektrischer Energie versorgbar ist bzw. dass eine mit der Bus-Schnittstelle 8 verbundene Sanitärartikelsteuerung mit elektrischer Energie versorgbar ist. Die Speisungsschnittstelle 11 steht mit dem Umwandler 14 in leitender Verbindung wird von diesem entsprechend gespiesen. Der Speisungsschnittstelle 11 ist in der gezeigten Ausführungsform ein Lastabwurfschalter 12 mit einer Strommesseinheit 13 vorgeschaltet. Der Lastabwurfschalter 12 ist derart ausgebildet, dass bei einem durch die Strommesseinheit 13 gemessenen Überstrom oder der Erfassung eines Kurzschlusses der Lastabwurfschalter 12 einen Schaltvorgang ausführt, so dass die Speisungsschnittstelle 10 mindestens kurzzeitig stromlos geschaltet werden kann.

Die Speisungsschnittstelle weist zwei elektrische Kontakte 11a und 11b auf, an welche ein Kabel, das zum Sanitärartikel führt, angeschlossen werden kann.

Der Umwandler 14 speist auch die elektronische Schaltung 2 mit dem Prozessor 3. Hierfür ist zwischen dem Umwandler 14 und der elektronischen Schaltung 2 ein Spannungswandler 15 und ein Gleichspannungsregler 18 angeordnet. Mit dem Spannungswandler 15 wird die Spannung vom Umwandler weiter reduziert, so dass der Prozessor mit einer reduzierten Spannung versorgbar ist. Vorzugsweise liegt die reduzierte Spannung nach dem Spannungswandler im Bereich von 1.5 bis 12 Volt. Mit dem Gleichspannungsregler 18 kann eine konstante Spannung für den Prozessor bereitgestellt werden.

Die mindestens eine Bus-Schnittstelle 5 steht vorzugsweise mit einem Kabel mit einer Sanitärartikelsteuerung von mindestens einem Sanitärartikel in Verbindung. Vorzugsweise sind mehrere Sanitärartikel mit ihren jeweiligen Sanitärartikelsteuerungen mit der Bus-Schnittstelle 5 in Verbindung. Über diese Verbindung lassen sich Daten, wie Steuerungsdaten und/oder Zustandsdaten, zwischen der Bus-Schnittstelle 5 bzw. dem Prozessor 3 austauschen.

Die mindestens eine Ethernet-Schnittstelle 5, die mindestens eine USB-Schnittstelle 6, 7, die mindestens eine Bus-Schnittstelle 8 und die mindestens eine drahtlose Funkschnittstelle 9 stehen mit dem Prozessor 3 der elektronischen Schaltung 2 über Datenverbindungen in Verbindung. Über diese Datenverbindungen lassen sich Daten zwischen den Schnittstellen 5, 6, 7, 8 und 9 und dem Prozessor 3 austauschen.

Vorzugsweise weist die elektronische Schaltung 2 weiter einen Speicher 16 auf, welcher zur Speicherung der Daten ausgebildet ist. Der Speicher 16 steht über den Prozessor 3 mit den Schnittstellen 5, 6, 7, 8 und 9 derart in Wirkverbindung, dass Daten zwischen den Schnittstellen 5, 6, 7, 8 und 9 und dem Prozessor 3 austauschbar sind.

Die Bus-Schnittstelle 8 weist eine Datenschnittstelle 10 auf, welche vorzugsweise eine RS-485-Schnittstelle ist. Die Datenschnittstelle 10 ist derart konfiguriert, dass Daten zwischen einer mit der Bus-Schnittstelle 8 verbundenen Sanitärartikelsteuerung eines Sanitärartikels und der RS-485-Schnittstelle austauschbar sind. Die RS-485-Schnittstelle weist dabei zwei Leiter A und B auf. Der RS-485-Schnittstelle ist hier ein Treibermodul 21 zugeordnet.

Eine USB-Schnittstelle 6 der genannten USB-Schnittstellen ist zur Aufnahme eines Datenträgers ausgebildet, wobei die USB-Schnittstelle 6 und der Prozessor 3 der elektronischen Schaltung 2 derart konfiguriert sind, dass über die USB-Schnittstelle 6 Daten zwischen dem Prozessor 3 und dem Datenträger austauschbar sind.

Die andere der beiden USB-Schnittstellen 7 der genannten USB-Schnittstellen ist zur Aufnahme eines Adapters mit einer Erweiterungsschnittstelle ausgebildet ist, wobei die USB-Schnittstelle 7 und der Prozessor 3 der elektronischen Schaltung 2 derart konfiguriert sind, dass über die USB-Schnittstelle 7 Daten zwischen dem Prozessor 3 und der Erweiterungsschnittstelle des Adapters austauschbar sind.

Die drahtlose Funkschnittstelle 9 ist in der gezeigten Variante eine WIFI-Schnittstelle und/oder eine Bluetooth-Schnittstelle. Hierzu ist ein entsprechendes WIFI-Bluetooth-Modul 19 angeordnet. Ferner ist der Ethernet-Schnittstelle 5 ein Ethernet-Modul 20 zugeordnet.

Vorzugsweise weist das Gateway 1 weiterhin mindestens eine Statusleuchte 17 auf, welche derart konfiguriert ist, dass einem Benutzer ein Status anzeigbar ist. In der gezeigten Ausführungsform ist pro Schnittstelle 4, 5, 6, 7, 8 und 9 jeweils eine Statusleuchte 17 angeordnet.

Das Gateway 1 wird in einem Sanitärsystem eingesetzt, wobei das Gateway 1 über die Bus-Schnittstelle mit mindestens einer Sanitärartikelsteuerung von mindestens einem Sanitärartikel wirkverbunden ist.

Ferner kann das Gateway ein "trusted platform module" aufweisen, in welchem Sicherheitselemente gespeichert sind. Das entsprechende Modul trägt das Bezugszeichen 22.

**BEZUGSZEICHENLISTE**

| | | | |
|---|---|---|---|
| 1 | Gateway | GND | Erdungsleiter |
| 2 | elektronische Schaltung | | |
| 3 | Prozessor | | |
| 4 | Energieversorgungsschnittstelle | | |
| 5 | Ethernet-Schnittstelle | | |
| 6 | USB-Schnittstelle | | |
| 7 | USB-Schnittstelle | | |
| 8 | Bus-Schnittstelle | | |
| 9 | drahtlose Funkschnittstelle | | |
| 10 | Datenschnittstelle, insbesondere RS-485-Schnittstelle | | |
| 11 | Speisungsschnittstelle | | |
| 11a | Kontakt | | |
| 11b | Kontakt | | |
| 12 | Lastabwurfschalter | | |
| 13 | Strommesseinheit | | |
| 14 | Umwandler | | |
| 15 | Spannungswandler | | |
| 16 | Speicher | | |
| 17 | Statusleuchte | | |
| 18 | Gleichspannungsregler | | |
| 19 | WIFI-Bluetooth-Modul | | |
| 20 | Ethernet-Modul | | |
| 21 | Treibermodul | | |
| 22 | Modul | | |
| A | erster Kontakt | | |
| B | zweiter Kontakt | | |
| L | Phasen leiter | | |
| N | Nullleiter | | |

## Patentansprüche

1. Gateway (1) für ein Sanitärsystem umfassend
eine elektronische Schaltung (2) mit einem Prozessor (3),
eine Energieversorgungsschnittstelle (4) zur Stromversorgung des Gateways (1), insbesondere der elektronischen Schaltung,
mindestens eine Ethernet-Schnittstelle (5),
mindestens eine USB-Schnittstelle (6, 7),
mindestens eine Bus-Schnittstelle (8), welche zur Wirkverbindung mit einer Sanitärartikelsteuerung von mindestens einem Sanitärartikel konfiguriert ist, und
mindestens eine drahtlose Funkschnittstelle (9),
wobei die mindestens eine Ethernet-Schnittstelle (5), die mindestens eine USB-Schnittstelle (5, 6), die mindestens eine Bus-Schnittstelle (8) und die mindestens eine drahtlose Funkschnittstelle (9) mit der elektronischen Schaltung (2) in Wirkverbindung stehen und
wobei die elektronische Schaltung (2) mit dem Prozessor (3) derart konfiguriert ist, dass Daten zwischen den genannten Schnittstellen (5, 6, 7, 8, 9) via den Prozessor (3) austauschbar sind und/oder dass Daten zwischen den genannten Schnittstellen (5, 6, 7, 8, 9) und dem Prozessor (3) der elektronischen Schaltung (2) austauschbar sind.

2. Gateway (1) nach Anspruch 1, **dadurch gekennzeichnet, dass** die Bus-Schnittstelle (8) eine Datenschnittstelle (10), insbesondere eine RS-485-Schnittstelle, aufweist, welche derart konfiguriert ist, dass Daten zwischen einer mit der Datenschnittstelle (10) verbundenen Sanitärartikelsteuerung eines Sanitärartikels und der Datenschnittstelle (10) austauschbar sind.

3. Gateway (1) nach Anspruch 1 oder 2, **dadurch gekennzeichnet, dass** die Bus-Schnittstelle (8) weiterhin eine Speisungsschnittstelle (11) aufweist, welche derart konfiguriert ist, dass ein mit der Bus-Schnittstelle (8) verbundener Sanitärartikel mit elektrischer Energie versorgbar ist bzw. dass eine mit der Bus-Schnittstelle (8) verbundene Sanitärartikelsteuerung mit elektrischer Energie versorgbar ist.

4. Gateway (1) nach Anspruch 3, **dadurch gekennzeichnet, dass** der Speisungsschnittstelle (11) ein Lastabwurfschalter (12) mit einer Strommesseinheit (13) vorgeschaltet ist, welcher Lastabwurfschalter (12) derart ausgebildet ist, dass bei einem durch die Strommesseinheit (13) gemessenen Überstrom oder bei einem festgestellten Kurzschluss der Lastabwurfschalter (12) einen Schaltvorgang ausführt, so dass die Speisungsschnittstelle (10) mindestens kurzzeitig stromlos geschaltet werden kann.

5. Gateway (1) nach einem der vorhergehenden Ansprüche, **dadurch gekennzeichnet, dass** die Energieversorgungsschnittstelle (4) für die Aufnahme von Netzspannung ausgebildet ist, wobei die Netzspannung vorzugsweise 230 Volt Wechselstrom ist.

6. Gateway (1) nach Anspruch 5, **dadurch gekennzeichnet, dass** das Gateway einen Umwandler (14) aufweist, welcher die Netzspannung in eine tiefere Spannung und Gleichstrom umwandelt.

7. Gateway (1) nach Anspruch 6, **dadurch gekennzeichnet, dass** der Umwandler (14) die Speisung für die Speisungsschnittstelle in der Bus-Schnittstelle bereitstellt.

8. Gateway (1) nach Anspruch 6 oder 7, **dadurch gekennzeichnet, dass** zwischen dem Umwandler (14) und dem Prozessor (3) ein Spannungswandler (15) angeordnet ist, welcher derart ausgebildet ist, dass die besagte tiefere Spannung weiter reduzierbar ist, so dass der Prozessor mit einer reduzierten Spannung versorgbar ist.

9. Gateway (1) nach Anspruch 8, **dadurch gekennzeichnet, dass** zwischen dem Spannungswandler (15) und dem Prozessor (3) ein linearer Gleichspannungsregler (18) angeordnet ist.

10. Gateway (1) nach einem der vorhergehenden Ansprüche, **dadurch gekennzeichnet, dass** eine USB-Schnittstelle (6) der genannten USB-Schnittstellen zur Aufnahme eines Datenträgers ausgebildet ist, wobei die USB-Schnittstelle (6) und der Prozessor (3) der elektronischen Schaltung (2) derart konfiguriert sind, dass über die USB-Schnittstelle (6) Daten zwischen dem Prozessor (3) und dem Datenträger austauschbar sind.

11. Gateway (1) nach einem der vorhergehenden Ansprüche, **dadurch gekennzeichnet, dass** eine USB-Schnittstelle (7) der genannten USB-Schnittstellen zur Aufnahme eines Adapters mit einer Erweiterungsschnittstelle ausgebildet ist, wobei die USB-Schnittstelle (7) und der Prozessor (3) der elektronischen Schaltung (2) derart konfiguriert sind, dass über die USB-Schnittstelle (7) Daten zwischen dem Prozessor (3) und der Erweiterungsschnittstelle des Adapters austauschbar sind.

12. Gateway (1) nach einem der vorhergehenden Ansprüche, **dadurch gekennzeichnet, dass** die drahtlose Funkschnittstelle (9) eine WIFI-Schnittstelle und/oder eine Bluetooth-Schnittstelle und/oder eine ZigBee-Schnittstelle ist.

13. Gateway (1) nach einem der vorhergehenden Ansprüche, **dadurch gekennzeichnet, dass** die elektronische Schaltung (2) einen Speicher (16) aufweist, welcher zur Speicherung der Daten ausgebildet ist.

14. Gateway (1) nach einem der vorhergehenden Ansprüche, **dadurch gekennzeichnet, dass** das Gateway (1) weiterhin mindestens eine Statusleuchte (17) aufweist, welche derart konfiguriert ist, dass einem Benutzer ein Status anzeigbar ist.

15. Verwendung eines Gateways (1) nach einem der vorhergehenden Ansprüche, **dadurch gekennzeichnet, dass** das Gateway (1) in einem Sanitärsystem eingesetzt wird, wobei das Gateway (1) über die Bus-Schnittstelle mit einer Sanitärartikelsteuerung von mindestens einem Sanitärartikel wirkverbunden ist.
